# EUROPÄISCHE PATENTANMELDUNG

(11) **EP 1 903 248 A1**
(43) Veröffentlichungstag der Anmeldung: **26.03.2008**
(21) Anmeldenummer: 07017187.1
(22) Anmeldetag: 03.09.2007
(51) Int. Cl.: F16D 65/12

(54) **Bremsscheibe**

(30) Priorität: 19.09.2006 DE 102006044576
(71) Anmelder: BPW Bergische Achsen KG, 51674 Wiehl (DE)
(72) Erfinder: Abt, Christian, 51643 Gummersbach (DE); Biegale, Achim, 51588 Nümbrecht (DE); Ebert, Jörg, Dr., 50858 Köln (DE); Schmidt, Hartmut, 51588 Nünbrecht (DE); Meurer, Bernd, 51674 Wiehl (DE)
(74) Vertreter: Christophersen & Partner

(57) **Zusammenfassung**

Vorgeschlagen wird eine Bremsscheibe in Verbundbauweise mit einem zwei Reibflächen (2A, 2B) mit einem dazwischen angeordneten Lüftspalt (5) aufweisenden, als Gussteil ausgebildeten Bremsring (1) und einem darin gießtechnisch teilweise eingebetteten Bremsringträger (3). Der Bremsringträger (3) ist unter Wahrung zu beiden Seiten ausgebildeter Lüftungskanäle in dem Lüftspalt (5) angeordnet. Zur Erzielung einer günstigen Luftdurchströmung der Bremsscheibe ist der Durchmesser des Bremsringträgers (3) geringer als der des Bremsrings (1), und der Bremsringträger (3) ist ausschließlich entlang des inneren Umfangsbereichs des Bremsrings (1) in diesen eingegossen.

## Beschreibung

Die Erfindung betrifft eine Bremsscheibe in Verbundbauweise mit einem zwei Reibflächen mit einem dazwischen angeordneten Lüftspalt aufweisenden, als Gussteil ausgebildeten Bremsring und einem darin gießtechnisch teilweise eingebetteten Bremsringträger, welcher Teil der Bremsmomentenübertragung von dem Bremsring auf die Fahrzeugnabe oder das Fahrzeugrad ist, und welcher unter Wahrung zu beiden Seiten des Bremsringträgers ausgebildeter Lüftungskanäle in dem Lüftspalt angeordnet ist.

Eine Bremsscheibe mit diesen Merkmalen ist aus der EP 1 434 951 B1 bekannt. In einen als Gussteil ausgebildeten Bremsring, an dem außen die Reibflächen ausgebildet sind, ist ein ebenfalls als Ringscheibe gestalteter Bremsringträger gleichen Durchmessers eingegossen. An seinem zahnartigen Innenrand ist der Bremsringträger mit Bohrungen zur Verbindung mit der Fahrzeugnabe versehen. Die Verbindung zwischen dem Bremsringträger und dem Bremsring erfolgt ausschließlich entlang dessen äußerem Umfangsbereich. Hierbei wird der Bremsringträger durch Stege gehalten, welche durch Öffnungen nahe des Außenrandes des Bremsringträgers durch diesen hindurchführen. Infolge der Verbindung nahe des äußeren Umfangsbereichs ist dem Bremsringträger eine Axialbewegung relativ zu dem Bremsring möglich, wozu der Lüftspalt so bemessen ist, dass ein hinreichender axialer Freiraum für die axiale Beweglichkeit zur Verfügung steht.

Nachteilig ist die durch den Bremsringträger bedingte Verringerung des wirksamen Lüftspaltquerschnitts mit der Folge, dass am Außenumfang kein ungehindertes Abströmen der durch den Kühlspalt hindurch geführten Kühlluft stattfindet.

In der DE 44 18 889 A1 ist eine in Verbundbauweise hergestellte Bremsscheibe offenbart, bei der sich der Bremsringträger radial nur gering in den gegossenen Bremsring hinein erstreckt. Die Anordnung führt jedoch zu einer Beeinträchtigung der Zuströmung in die in der Bremsscheibe angeordneten Kühlluftkanäle.

Auch aus der US 2,769,512 ist eine in Verbundbauweise hergestellte Bremsscheibe bekannt, bei der sich der hier zweiteilige Bremsringträger radial etwas in das massive Material des gegossenen Bremsrings hinein erstreckt. Die Anordnung führt nur deshalb zu keiner größeren Beeinträchtigung der Strömung in den Kühlluftkanälen des Bremsrings, da sich in dem zweiteiligen Bremsringträger Öffnungen in Gestalt von Schlitzen befinden. Diese Öffnungen können zu einer Schwächung der Bremsscheibe im Hinblick auf die übertragbaren Bremsmomente führen.

Der Erfindung liegt daher die **Aufgabe** zugrunde, eine Bremsscheibe für Fahrzeug-Scheibenbremsen zu schaffen, die trotz der Verbundbauweise aus einem gegossenen Bremsring und einem darin gießtechnisch eingebetteten Bremsringträger ein ungehindertes Abströmen der durch den Lüftspalt hindurchgeführten Kühlluft ermöglicht.

Zur **Lösung** wird bei einer Bremsscheibe mit den eingangs angegebenen Merkmalen vorgeschlagen, dass der Durchmesser des Bremsringträgers geringer als der des Bremsrings ist, und der Bremsringträger entlang des inneren Umfangsbereichs des Bremsrings in diesen eingegossen ist.

Eine solcherart gestaltete Bremsscheibe ermöglicht eine staufreie Abströmung der durch den Lüftspalt hindurchgeführten Kühlluft nach außen hin, d. h. in die Umgebung. Eine Begrenzung des Lüftspaltquerschnittes reduziert sich auf die aus statischen Gründen unverzichtbaren Verbindungsstege zwischen den beiden Bremsscheibenhälften. Zwischen diesen Stegen verbleiben jedoch ausreichend große Lüftungskanäle, über die die den Lüftspalt durchströmende Kühlluft nach außen wegströmen kann.

Der Luftdurchsatz in der erfindungsgemäßen Bremsscheibe lässt sich nochmals verbessern, indem sich im Inneren des gegossenen Bremsrings von beiden Seiten her Vorsprünge in den Lüftspalt erstrecken, wobei die Vorsprünge axial bis an den Bremsringträger heranreichen, und wobei jeder Vorsprung den Lüftspaltquerschnitt in einen ersten und einen zweiten radialen Lüftungskanal trennt. Die sich von beiden Seiten her in den Lüftspalt erstreckenden Vorsprünge, die axial bis an den Bremsringträger heranreichen, führen zu einer Stabilisierung des Bremsringträgers in dem Bremsring und damit zu einer erhöhten Festigkeit des Verbundes. Gleichwohl ist ein ausreichender Kühlluftdurchsatz möglich, da jeder Vorsprung den Lüftspaltquerschnitt in einen ersten und einen zweiten radialen Lüftungskanal trennt, und damit ausreichend große Strömungsquerschnitte zur Verfügung stehen. Vorzugsweise sind die Vorsprünge napfartig gestaltet, und sie liegen mit ihrer ebenen Stirnfläche gegen die Flachseite des Bremsringträgers flächig an.

Des weiteren wird vorgeschlagen, dass im Inneren des gegossenen Bremsrings in Umfangsrichtung verteilt Stege ausgebildet sind, die den Lüftspalt überbrücken und an denen der Bremsringträger gießtechnisch befestigt ist. Vorzugsweise sind die Stege durch Öffnungen oder Ausnehmungen des Bremsringträgers hindurchgeführt.

Zur Verbesserung des Verbundes zwischen Bremsring und Bremsringträger können die Stege, in Richtung Ihrer Axialerstreckung betrachtet, jeweils eine Engstelle und davor und dahinter erweiterte Abschnitte aufweisen, wobei die Engstelle die Hindurchführung durch die Öffnung bzw. Ausnehmung des Bremsringträgers ist, und die erweiterten Abschnitte zumindest teilweise gegen die Flachseite des Bremsringträgers anliegen, und diesen mechanisch zusätzlich stabilisieren.

Gemäß einer weiteren Ausgestaltung der Bremsscheibe kann ein Teil der Stege und der diesen Stegen entsprechenden Öffnungen bzw. Ausnehmungen des Bremsringträgers in Radialrichtung länglich geformt sein.

Gemäß einer weiteren Ausgestaltung verlaufen die beiden Längsseiten der Stege zueinander parallel, und die Öffnungen bzw. Ausnehmungen des Bremsringträgers weisen entsprechende Parallelränder auf.

Mit dem Ziel geringer Herstellungskosten bei der Fertigung der in Verbundbauweise ausgeführten Bremsscheibe wird vorgeschlagen, dass der Bremsringträger ein Winkelring mit einem zylindrischen Ringabschnitt ist, und dass der zylindrische Ringabschnitt mit einem an einer Fahrzeug-Radnabe befestigbaren Bremsscheibentopf verbunden ist. Diese Verbindung ist vorzugsweise formschlüssig. Zusätzlich oder auch alternativ ist ein Verschweißen möglich. Zudem lassen sich durch eine solche Schweißverbindung hohe Bremsmomente übertragen.

Ausführungsbeispiele der Erfindung werden im Folgenden anhand der zugehörigen Zeichnungen beschrieben. Darin zeigen:
Fig. 1 in einer Schnittdarstellung eine in Verbundbauweise hergestellte Bremsscheibe einschließlich eines angeschweißten Bremsscheibentopfes;
Fig. 2 den unteren Teil der Bremsscheibe nach Fig. 1 in einer vergrößerten Darstellung;
Fig. 3 einen Schnitt entlang der in Fig. 2 bezeichneten Schnittebene III-III;
Fig. 4 die Bremsscheibe einschließlich des Bremsscheibentopfes in einer perspektivischen Darstellung;
Fig. 5 in gleicher Perspektive wie bei Fig. 4 die Bremsscheibe mit einem idealisierten Schnitt in der Ebene des Ihres zentralen Lüftspalts;
Fig. 6 in einer der Fig. 5 entsprechenden Perspektive wiederum den idealisierten Schnitt in der Ebene des zentralen Lüftspalts, jedoch im Vergleich zu Fig. 5 unter Weglassen des in dem Lüftspalt eingeordneten Bremsringträgers;
Fig. 7 eine zweite Ausführungsform einer in Verbundbauweise hergestellten Bremsscheibe einschließlich eines Bremsscheibentopfes;
Fig. 8 die Bremsscheibe einschließlich des Bremsscheibentopfes in einer perspektivischen Darstellung;
Fig. 9 in gleicher Perspektive wie bei Fig. 8 die Bremsscheibe mit einem idealisierten Schnitt in der Ebene des zentralen Lüftspalts und
Fig. 10 in einer der Fig. 9 entsprechenden Perspektive wiederum den idealisierten Schnitt in der Ebene des zentralen Lüftspalts, jedoch im Vergleich zu Fig. 9 unter Weglassen des in dem Lüftspalt eingeordneten Bremsringträgers.

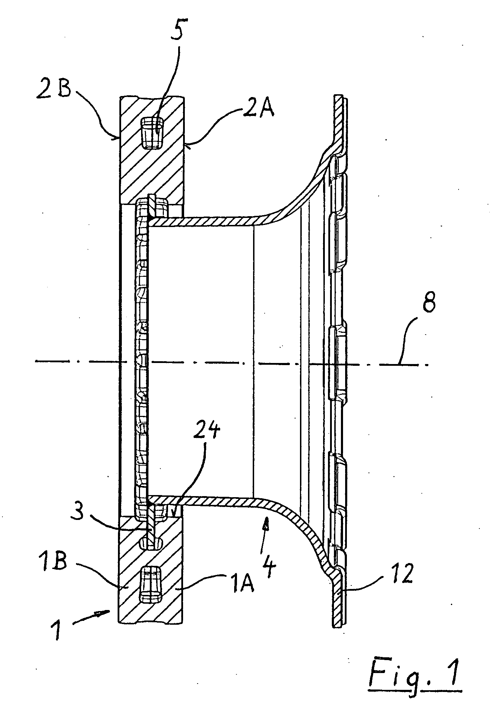

Die in den Figuren 1 bis 4 in ihrer Gesamtheit wiedergegebene Bremsscheibe für eine Fahrzeug-Scheibenbremse setzt sich aus insgesamt drei Teilen zusammen, nämlich dem eigentlichen Bremsring 1 mit den außen angeordneten Reibflächen 2A, 2B für die Bremspads der Scheibenbremse, ferner einem in den Bremsring gießtechnisch eingebetteten Bremsringträger 3, sowie einem Bremsscheibentopf 4. Die Bremsscheibe ist vom innenbelüfteten Bautyp, d. h. der Bremsring 1 weist einen zentralen Lüftspalt 5 aus vielen einzelnen Lüftungskanälen 6, 7 auf. Die Lüftungskanäle 6, 7 verlaufen im Wesentlichen radial in Bezug auf die Mittelachse 8 der Bremsscheibe, sie können jedoch auch leicht bogenförmig verlaufen, wie zum Beispiel in der DE 102 41 655 A1 beschrieben.

Der Bremsring 1 besteht aus Stahlguss. Darin gießtechnisch teilweise eingebettet ist, ohne dass es zu einer Materialverbindung durch z.B. Diffusionsprozesse kommt, der Bremsringträger 3. Dieser ist bei diesem Ausführungsbeispiel eine flache Ringscheibe aus z. B. gestanztem Stahlblech mit einer Dicke von 4-8 mm. Der Bremsringträger 3 ist frei von irgendwelchen Öffnungen, um so die Übertragung hoher Bremsmomente zu ermöglichen.

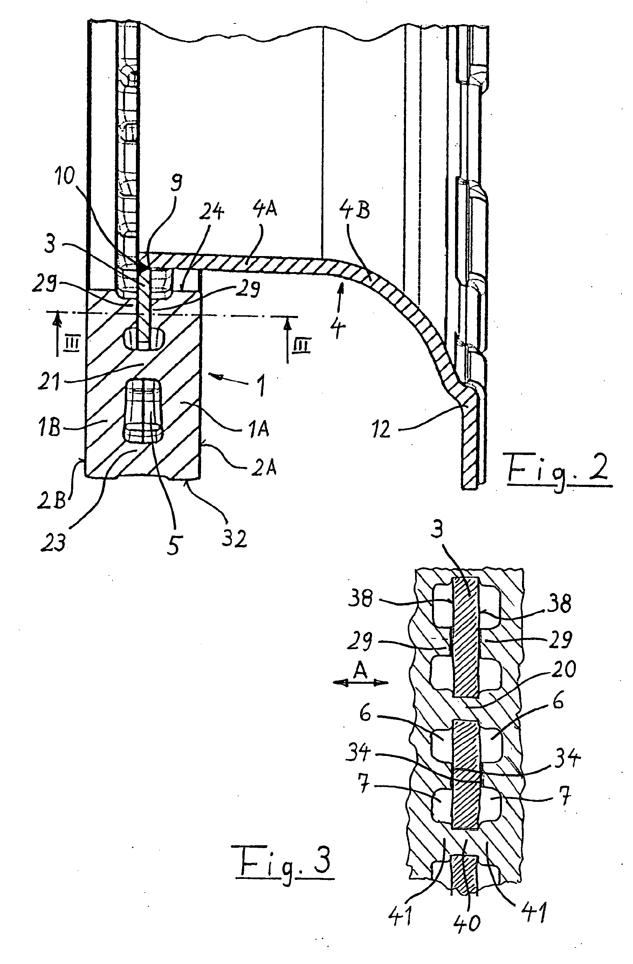

Der Außendurchmesser des Bremsringträgers 3 ist deutlich geringer als der des Bremsrings 1. Nur im Bereich nahe am Innenrand 24 des Bremsrings 1 schließt dieser den kleineren Bremsringträger 3 ein. Der Innenrand 9 des Bremsringträgers 3 ist kreisrund und zur Verbindung mit dem in diesem Bereich zylindrischen Bremsscheibentopf 4 als Schweißkante ausgebildet. In Fig. 2 ist die Schweißnaht mit dem Bezugszeichen 10 versehen.

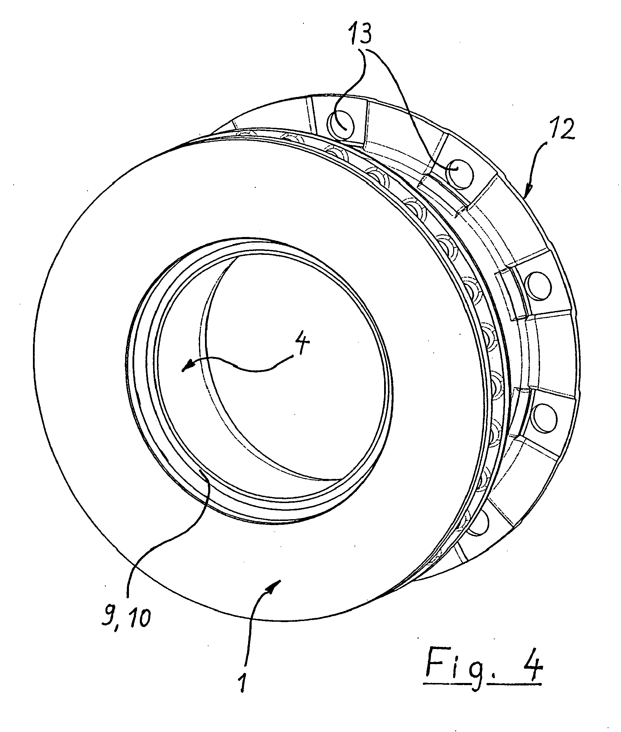

Der aus tiefgezogenem Stahlblech bestehende Bremsscheibentopf 4 weist einen sich axial erstreckenden zylindrischen Abschnitt 4A, einen sich erweiternden Abschnitt 4B und einen radial nach außen gerichteten Flansch 12 auf. Der Flansch 12 ist über seinen Umfang verteilt mit Öffnungen 13 (Fig. 4) versehen, durch welche Schraubbolzen hindurchführbar sind, um so die Bremsscheibe an der Nabe oder auch der Felge eines Fahrzeugrades zu befestigen.

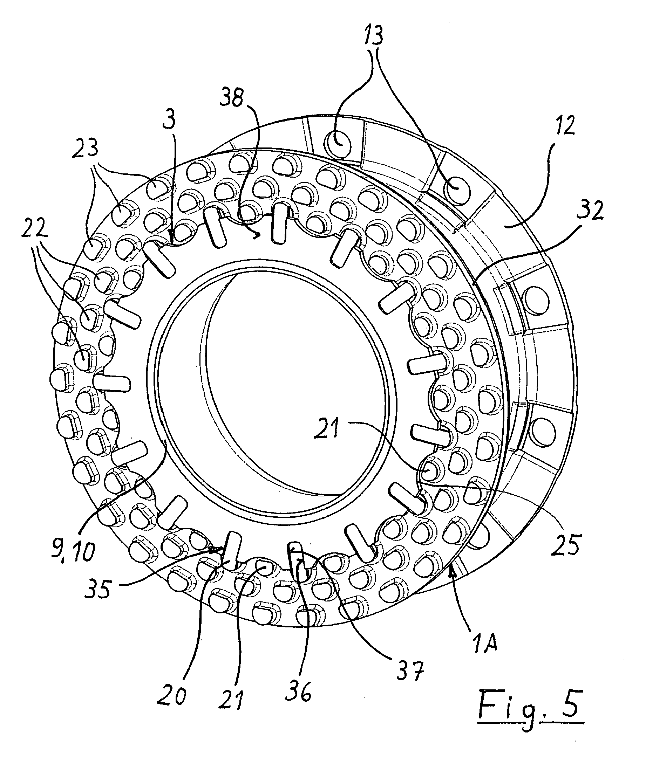

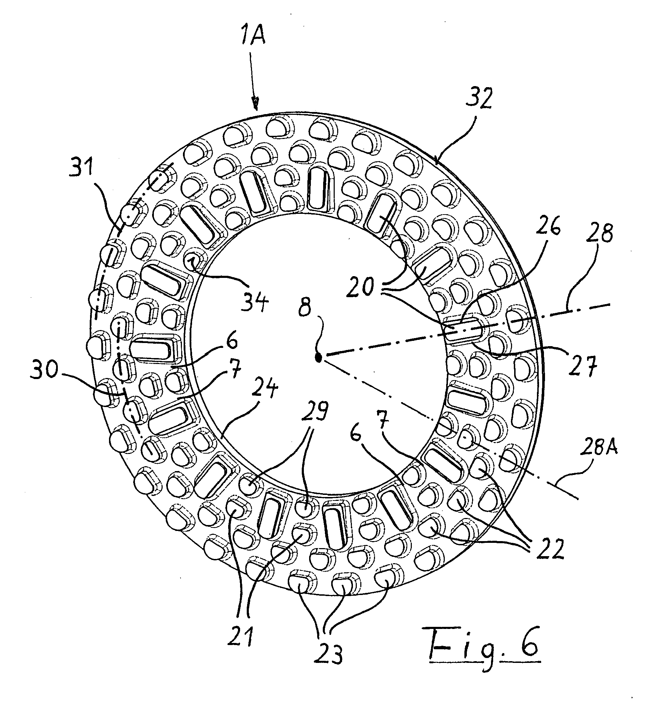

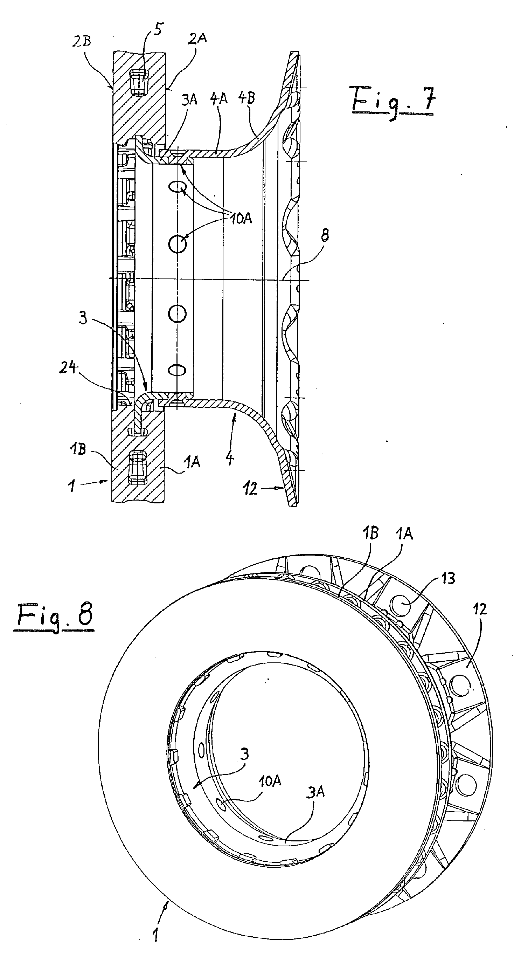

Die beiden Hälften 1A, 1B des gegossenen Bremsrings 1 stehen materialmäßig über eine Vielzahl von Gussstegen in Verbindung, zwischen denen die Strömungskanäle verlaufen. Die Fign. 5 und 6 zeigen den aus Gründen der Anschauung in der Ebene des Lüftspalts aufgeschnittenen Bremsring 1, d. h. eine Hälfte 1A des Bremsrings. Zu erkennen sind Gussstege 20, 21, 22 und 23, welche sich ausnahmslos durchgehend von der einen Hälfte 1A zu der anderen Hälfte 1B des Bremsrings erstrecken. Die Stege 20 reichen bis nahe an den Innenrand 24 des Bremsrings 1. Sie sind in Radialrichtung des Bremsrings entlang ihrer Mittellinie 28 (Fig. 6) deutlich länglich geformt, ihre beiden Längsseiten 26, 27 verlaufen parallel zueinander. Es folgen in Umfangsrichtung nicht zwei der Stege 20 unmittelbar aufeinander, sondern sie wechseln sich mit jeweils einem Steg 21 und einem Vorsprung 29 ab. Die Vorsprünge 29 und der Steg 21 liegen auf derselben Radiallinie 28A. Während sich die Vorsprünge 29 sehr nah am Innenrand 24 befinden, befinden sich die einzelnen Stege 21 radial weiter außen und etwa so weit außen, wie sich die benachbarten, deutlich längeren Stege 20 radial nach außen erstrecken.

Bei dem hier beschriebenen ersten Ausführungsbeispiel weist der Außenrand des Bremsringträgers 3 auf den Umfangssegmenten, auf denen sich die durchgehenden Stege 21 befinden, eine Ausbuchtung 25 auf. Diese berührt bei dem hier beschriebenen Ausführungsbeispiel den Steg 21 nicht.

Auf einem nochmals größeren Durchmesser 30, bis zu dem der Bremsringträger 3 nicht mehr reicht, befinden sich die Stege 22, und auf dem größten Durchmesser 31, welcher bereits nahe am Außenrand 32 des Bremsrings liegt, befinden sich die Stege 23. Die Stege 20 bis 23 sind zueinander auf Lücke angeordnet, d. h. jeder Steg auf dem jeweils größeren Durchmesser ist in der Lücke zu den Stegen auf dem jeweils kleineren Durchmesser angeordnet.

Bei den Vorsprüngen 29, welche sich nahe am Innenrand 24 jeweils zwischen den länglichen Stegen 20 befinden, handelt es sich nicht um zwischen den Bremsringhälften durchgehende Stege, sondern um kurze Näpfe, die sich von der jeweiligen Bremsringhälfte aus in den Lüftspalt 5 erstrecken, und in einer flachen Stirnfläche 34 enden. Die Vorsprünge 29 trennen daher benachbarte Lüftungskanäle 6, 7 voneinander. Die Stirnfläche 34 der Vorsprünge liegt gegen die jeweilige Flachseite 38 des Bremsringträgers 3 an, und stützt diesen. Trotzdem kann entlang beider Flachseiten des Bremsringträgers 3 Kühlluft durch den gegossenen Bremsring strömen, und diesen sowie den Bremsringträger im Bremsbetrieb kühlen.

Auch Fig. 5 zeigt die in der Ebene des Lüftspalts aufgeschnittene Bremsscheibe, hier jedoch mit dem darin angeordneten, flachen Bremsringträger 3. Zu erkennen ist, wie sich der Bremsringträger 3 infolge seiner unrunden Außenkontur in die gegossene Gestaltung des Bremsrings einfügt. Der Bremsringträger 3 ist außen mit Ausnehmungen 35 versehen, die als nach außen offene Schlitze mit zueinander parallelen Rändern 36, 37 gestaltet sind. Mit diesen parallelen Rändern 36, 37 liegen die Ausnehmungen 35 an den entsprechenden Längsseiten 26, 27 der länglichen Stege 20 an. Die Mittellinie 28 zwischen den beiden Längsseiten 26, 27 ist hierbei exakt auf die Mittelachse 8 der Bremsscheibe ausgerichtet.

In Fig. 5 verborgen sind die napfartigen Vorsprünge 29 der Bremsringhälfte 1A. Denn diese Vorsprünge 29 werden durch den Bremsringträger 3 verdeckt, gegen dessen Flachseite sie mit ihren ebenen Stirnflächen 34 anliegen. Diese Zusammenhänge werden nachfolgend anhand der Fign. 2 und 3 näher erläutert:

Der auf dem Teilkreisdurchmesser der napfartigen Vorsprünge 29 angelegte Schnitt Fig. 3 zeigt abwechselnd die von beiden Seiten her in Richtung auf den Bremsringträger 3 vorstehenden Vorsprünge 29 und die die Ausnehmungen 35 des Bremsringträgers 3 durchdringenden, länglichen Stege 20.

Des weiteren lässt die Schnittdarstellung Fig. 3 erkennen, dass die länglichen Stege 20, in Richtung ihrer Axialerstreckung A betrachtet, jeweils eine Engstelle 40 und davor und dahinter erweiterte Abschnitte 41 aufweisen. Die Engstelle 40 ist hierbei die Hindurchführung durch die Ausnehmung 35 des Bremsringträgers 3, wohingegen die erweiterten Abschnitte 41 teilweise gegen die jeweilige Flachseite 38 des Bremsringträgers 3 anliegen. Auf diese Weise wird eine sehr gute axiale Fixierung des Bremsringträgers 3 beim Umgießen mit dem Gussmaterial des Bremsrings erreicht. Durch die Parallelgestaltung der Längsseiten 26, 27 und der Längsränder 36, 37 können temperaturbedingte, unterschiedliche radiale Ausdehnungen von Bremsring 1 und Bremsringträger 3 ausgeglichen werden. Zur Fixierung in Axialrichtung A tragen ferner die von beiden Seiten her an den Flachseiten 38 des Bremsringträgers 3 anliegenden Vorsprünge 29 bei.

Die Herstellung der Bremsscheibe mit Ausnahme des Topfes 4 erfolgt im Verbundguss. Hierzu wird der als Blechstanzteil vorgefertigte Bremsringträger 3 in der Gießform fixiert, bevor Stahlguss in die Gießform eingefüllt wird und entsprechend dem vorgeformten Gießkern den Bremsring 1 einschließlich aller Stege 20 bis 23 und der Vorsprünge 29 formt. Nachdem der Guss ausgehärtet ist, stellt sich die in Fig. 3 dargestellte Verbindung der Teile ein, bei der der Bremsringträger 3 ausschließlich entlang des inneren Umfangsbereichs des Bremsrings 1 in diesem fixiert ist.

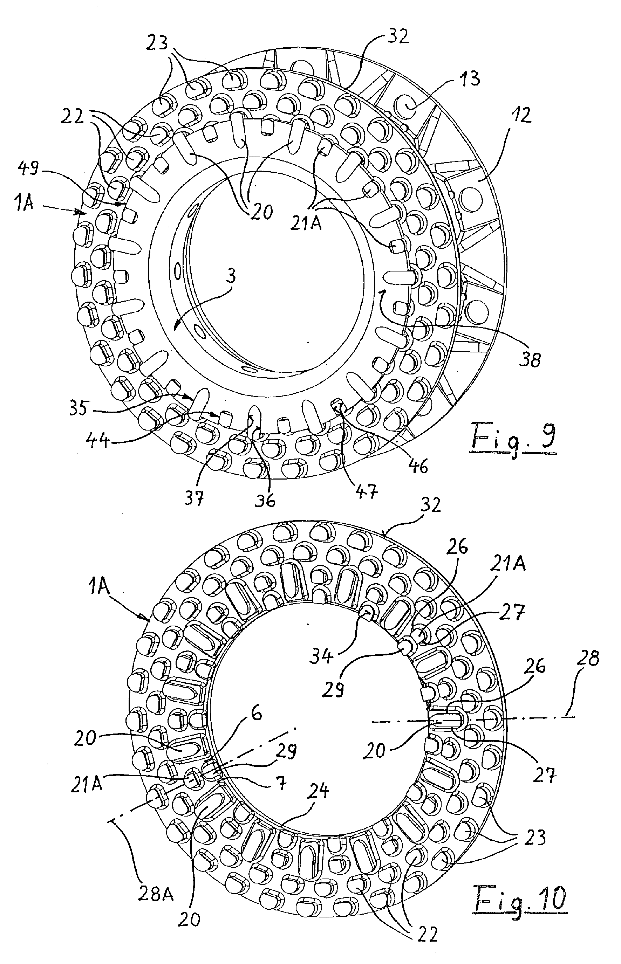

Eine zweite Ausführungsform der Bremsscheibe in Verbundweise wird im folgenden anhand der Figuren 7 bis 10 erläutert, wobei nur die Unterschiede zur ersten Ausführungsform beschrieben werden.

Der Bremsringträger 3 ist hier keine insgesamt flache Scheibe, sondern ein Winkelring mit einem zylindrisch verlaufenden Ringabschnitt 3A. In dessen Endbereich ist bei 10A der ebenfalls zylindrische Abschnitt 4A des Bremsscheibentopfes 4 befestigt. Die Verbindung erfolgt durch Formschlusselemente, eventuell auch durch zusätzliches oder auch alternatives Verschweißen der zu verbindenden Teile 3,4.

Unterschiedlich im Vergleich zur ersten Ausführungsform ist auch die Funktion der kurzen Gussstege 21A (Fig. 9, Fig.10), welche sich, quer zu den Lüftspalten, durchgehend von der einen zu der anderen Hälfte des Bremsrings 1 erstrecken. Die Stege 21A befinden sich zwar an denselben Stellen wie die Stege 21 der ersten Ausführungsform, sie weisen jedoch zu beiden Seiten der Radiallinie 28A zueinander und auch zu der Radiallinie 28A parallele Längsseiten 26, 27 auf (Fig. 10), auch wenn diese Längsseiten deutlich kürzer als die Längsseiten 26, 27 der langen Stege 20 sind.

Korrespondierend zu den Längsseiten 26, 27 des jeweiligen Stegs 21A ist der Bremsring 3 mit einer kurzen Ausnehmung 44 mit Längsrändern 46, 47 versehen, so dass der Längsrand 46 an der einen, und der Längsrand 47 an der anderen Längsseite des kurzen Stegs 21A anliegt. Die Einzelheiten dieses Anliegens sind wie bereits zu den längeren Stegen 20 beschrieben.

Die kurzen Ausnehmungen 44 für die Stege 21A erstrecken sich, ebenso wie die längeren Ausnehmungen 35 für die langen Stege 20, vom Außenrand 49 des Bremsringträgers 3 exakt radial nach innen hin. Zudem wechseln sich in Umfangsrichtung die kurzen Ausnehmungen 44 mit den längeren Ausnehmungen 35 ab. Die kurzen Ausnehmungen 44 führen in Verbindung mit den darin eingegossenen Stegen 21A zu einer nochmals verbesserten Abstützung des Bremsrings 3 in Bremsscheiben-Umfangsrichtung. Zugleich bleibt die Möglichkeit radialer Relativbewegungen aufgrund des unterschiedlichen thermischen Ausdehnungsverhaltens gewahrt.

### Bezugszeichen

- 1: Bremsring
- 1A: Hälfte
- 1B: Hälfte
- 2A: Reibfläche
- 2B: Reibfläche
- 3: Bremsringträger
- 3A: zylindrischer Ringabschnitt
- 4: Bremsscheibentopf
- 4A: zylindrischer Abschnitt
- 4B: sich erweiternder Abschnitt
- 5: Lüftspalt
- 6: Lüftungskanal
- 7: Lüftungskanal
- 8: Mittelachse
- 9: Innenrand
- 10: Schweißnaht
- 10A: Formschlußelemente
- 12: Flansch
- 13: Öffnung
- 20: Steg
- 21: Steg
- 21A: Steg
- 22: Steg
- 23: Steg
- 24: Innenrand
- 25: Ausbuchtung
- 26: Längsseite
- 27: Längsseite
- 28: Mittellinie
- 28A: Radiallinie
- 29: napfartiger Vorsprung
- 30: Durchmesser
- 31: Durchmesser
- 32: Außenrand
- 34: Stirnfläche
- 35: Ausnehmung
- 36: Längsrand
- 37: Längsrand
- 38: Flachseite
- 40: Engstelle
- 41: erweiterter Abschnitt
- 44: Ausnehmung
- 46: Längsrand
- 47: Längsrand
- 49: Außenrand
- A: Axialerstreckung

## Patentansprüche

1. Bremsscheibe in Verbundbauweise mit einem zwei Reibflächen (2A, 2B) mit einem dazwischen angeordneten Lüftspalt (5) aufweisenden, als Gussteil ausgebildeten Bremsring (1) und einem darin gießtechnisch teilweise eingebetteten Bremsringträger (3), welcher Teil der Bremsmomentenübertragung von dem Bremsring (1) auf die Fahrzeugnabe oder das Fahrzeugrad ist, und welcher unter Wahrung zu beiden Seiten des Bremsringträgers (3) ausgebildeter Lüftungskanäle in dem Lüftspalt (5) angeordnet ist,
**dadurch gekennzeichnet,**
**dass** der Durchmesser des Bremsringträgers (3) geringer als der des Bremsrings (1) ist, und der Bremsringträger (3) entlang des inneren Umfangsbereichs des Bremsrings (1) in diesen eingegossen ist.

2. Bremsscheibe nach Anspruch 1, **dadurch gekennzeichnet, dass** sich im Inneren des gegossenen Bremsrings (1) von beiden Seiten her Vorsprünge (29) in den Lüftspalt (5) erstrecken, dass die Vorsprünge (29) axial bis an den Bremsringträger (3) heranreichen, und dass jeder Vorsprung (29) den Lüftspaltquerschnitt in einen ersten (6) und einen zweiten (7) radialen Lüftungskanal trennt.

3. Bremsscheibe nach Anspruch 2, **dadurch gekennzeichnet, dass** die Vorsprünge (29) napfartig gestaltet sind und mit ebenen Stirnflächen (34) gegen die Flachseite (38) des Bremsringträgers (3) flächig anliegen.

4. Bremsscheibe nach Anspruch 2 oder Anspruch 3, **dadurch gekennzeichnet, dass** sich die Vorsprünge (29) in Umfangsrichtung mit Stegen (20) abwechseln, die den Lüftspalt (5) überbrücken und an denen der Bremsringträger (3) gießtechnisch befestigt ist.

5. Bremsscheibe nach einem der Ansprüche 2 bis 4, **dadurch gekennzeichnet, dass** radial auswärts der Vorsprünge (29) Stege (21A) angeordnet sind, die den Lüftspalt (5) überbrücken und an denen der Bremsringträger (3) gießtechnisch befestigt ist..

6. Bremsscheibe nach einem der Ansprüche 1 bis 3, **dadurch gekennzeichnet, dass** im Inneren des gegossenen Bremsrings (1) in Umfangsrichtung verteilt Stege (20; 21A) ausgebildet sind, die den Lüftspalt (5) überbrücken und an denen der Bremsringträger (3) gießtechnisch befestigt ist.

7. Bremsscheibe nach Anspruch 6, **dadurch gekennzeichnet, dass** die Stege (20; 21A) durch Öffnungen oder Ausnehmungen (35; 44) des Bremsringträgers (3) hindurchführen.

8. Bremsscheibe nach Anspruch 7, **dadurch gekennzeichnet, dass** die Stege (20; 21A), in Richtung Ihrer Axialerstreckung (A) betrachtet, jeweils eine Engstelle (40) und davor und dahinter erweiterte Abschnitte (41) aufweisen, wobei die Engstelle (40) die Hindurchführung durch die Öffnung bzw. Ausnehmung (35; 44) des Bremsringträgers (3) ist, und die erweiterten Abschnitte (41) zumindest teilweise gegen die Flachseite (38) des Bremsringträgers (3) anliegen.

9. Bremsscheibe nach Anspruch 7 oder 8, **dadurch gekennzeichnet, dass** die Stege (20; 21A) und die Öffnungen bzw. Ausnehmungen (35; 44) des Bremsringträgers (3) in Radialrichtung länglich geformt sind.

10. Bremsscheibe nach Anspruch 9, **dadurch gekennzeichnet, dass** die beiden Längsseiten (26, 27) der Stege (20; 21A) zueinander parallel verlaufen, und die Öffnungen bzw. Ausnehmungen (35; 44) des Bremsringträgers (3) entsprechende Parallelränder (36, 37; 46, 47) aufweisen..

11. Bremsscheibe nach einem der Ansprüche 1 bis 10, **dadurch gekennzeichnet, dass** der Bremsringträger (3) eine flache Ringscheibe ist, deren Innenrand (9) eine Schweißkante zur Verbindung mit einem Bremsscheibentopf (4) bildet.

12. Bremsscheibe nach einem der Ansprüche 1 bis 10, **dadurch gekennzeichnet, dass** der Bremsringträger (3) ein Winkelring mit einem zylindrischen Ringabschnitt (3A) ist, und dass der zylindrische Ringabschnitt (3A) mit einem an einer Radnabe befestigbaren Bremsscheibentopf (4) verbunden ist, vorzugsweise formschlüssig mit zusätzlicher Verschweißung.
